# EUROPEAN PATENT APPLICATION

(11) **EP 2 615 829 A1**
(43) Date of publication of application: **17.07.2013**
(21) Application number: 11823429.3
(22) Date of filing: 29.08.2011
(51) Int. Cl.: H04N 5/91, G06T 7/20, G11B 27/02

(54) **MOVING PICTURE PROCESSING DEVICE, AND MOVING PICTURE PROCESSING METHOD AND PROGRAM**

(30) Priority: 06.09.2010 JP 2010198984
(71) Applicant: Sony Corporation, Tokyo 108-0075 (JP)
(72) Inventor: TAKAGI, Yoshinori, Tokyo 108-0075 (JP)
(74) Representative: Mills, Julia
(86) International application number: PCT/JP2011/069395
(87) International publication number: WO 2012/032953

(57) **Abstract**

Transitions between cuts are detected from a moving picture containing a plurality of cuts, the plurality of cuts are categorized into a plurality of cut groups having mutually different feature amounts, and a plurality of cut pairs including two or more sequential cuts belonging to the mutually different cut groups and being repeated in the moving picture are identified, a predetermined number of the cut pairs, which are less than the plurality of cut pairs in number, are generated from the plurality of cut pairs by combining at least a portion of the plurality of cuts in a manner that two or more cuts constituting each cut pair belong to mutually different cut groups and a context of cut transitions in the moving picture is maintained, and a cut composition image including the generated cut pairs is generated.

## Description

### Technical Field

The present disclosure relates to a moving picture processing device, a moving picture processing method, and a program.

### Background Art

A video (moving picture) generally includes many cuts. In image expressions, the cut composition may be devised such as repeating a series of mutually different cuts (also called a cutback) according to the creator's intention. Incidentally, for those who enjoy video or those who use video as a material of other video, information about how video objects are grasped, in other words, how video is expressed in temporal context of video may be important.

### Summary of Invention

### Technical Problem

Thus, identifying cut pairs repeated as a series of mutually different cuts from a moving picture and generating a cut composition image in which the representative image of each cut is arranged according to the order of cut transitions while the boundary of cut pairs being specified is proposed.

However, if the cutback becomes more frequent and the number of cut pairs increases, the cut composition image may become larger than a display area in which the cut composition image is displayed. If an attempt is made to display the cut composition image at a time to maintain at-a-glance visibility, representative images will be reduced at a higher rate and displayed, leading to lower visibility of the cut composition image. If an attempt is made to partially display the cut composition image to maintain visibility of the cut composition image, the cut composition image will be divided and displayed, leading to lower at-a-glance visibility. Thus, in any case, the user will not be able to easily grasp the cut composition of a moving picture through the cut composition image.

Therefore, the present disclosure provides a moving picture processing device capable of generating a cut composition image allowing one to easily grasp the cut composition of a moving picture, a moving picture processing method, and a program.

### Solution to Problem

According to an embodiment of the present disclosure, there is provided a moving picture processing device, including a cut transition detection unit that detects, from a moving picture containing a plurality of cuts, transitions between the cuts, a cut pair identification unit that categorizes the plurality of cuts into a plurality of cut groups having mutually different feature amounts, and identifies a plurality of cut pairs including two or more sequential cuts belonging to the mutually different cut groups and being repeated in the moving picture, a cut pair generation unit that generates a predetermined number of the cut pairs, which are less than the plurality of cut pairs in number, from the plurality of cut pairs by combining at least a portion of the plurality of cuts in a manner that two or more cuts constituting each cut pair belong to mutually different cut groups and a context of cut transitions in the moving picture is maintained, and a cut composition image generation unit that generates a cut composition image including the generated cut pairs.

The cut pair generation unit may categorize the plurality of cut pairs into the predetermined number of pair groups, and then, for each of the pair groups, may generate one cut pair from cut pairs contained in each of the pair groups by combining at least a portion of the cuts contained in each of the pair groups in a manner that two or more cuts constituting each cut pair belong to mutually different cut groups and a context of cut transitions in the moving picture is maintained.

The cut pair generation unit may categorize the plurality of cut pairs into the predetermined number of pair groups based on feature amounts of cuts.

The cut pair generation unit may categorize the plurality of cut pairs into the predetermined number of pair groups based on feature amounts of cut pairs.

The cut pair generation unit may generate one cut pair by combining the plurality of cuts based on feature amounts of cuts.

The cut pair generation unit may generate one cut pair by combining the plurality of cuts based on feature amounts of cut pairs.

The cut pair generation unit may sort out cuts based on feature amounts of cuts for each cut group, and may generate one cut pair by combining the plurality of sorted cuts.

The cut pair generation unit may sort out cuts based on feature amounts of cuts for a first cut group, and may generate one cut pair by combining a plurality of cuts belonging to a same cut pair as the sorted cuts.

The cut pair may be generated based on an inner product of similarity matrices indicating a similarity between cut pairs.

The cut pair with a maximum total of the inner products of the similarity matrices may be generated as a representative cut pair representing the plurality of cut pairs.

The cut pair whose similarity to the representative cut pair is low may be generated together with the representative cut pair.

The cut pair may be generated based on a scalar value of a similarity matrix indicating a similarity between cut pairs.

The cut pair with a maximum scalar value of the similarity matrix may be generated as a representative cut pair representing the plurality of cut pairs.

The cut pair whose similarity to the representative cut pair is low may be generated together with the representative cut pair.

The predetermined number may be set in accordance with display conditions of the cut composition image.

According to an embodiment of the present disclosure, there is provided a moving picture processing method including detecting, from a moving picture containing a plurality of cuts, transitions between the cuts, categorizing the plurality of cuts into a plurality of cut groups having mutually different feature amounts, and identifies a plurality of cut pairs including two or more sequential cuts belonging to the mutually different cut groups and being repeated in the moving picture, generating a predetermined number of the cut pairs, which are less than the plurality of cut pairs in number, from the plurality of cut pairs by combining at least a portion of the plurality of cuts in a manner that the two or more cuts constituting each cut pair belong to mutually different cut groups and a context of cut transitions in the moving picture is maintained, and generating a cut composition image including the generated cut pairs.

According to another aspect of the present disclosure, a program to cause a computer to execute the moving picture processing method is provided. The program may be provided by using a computer readable recording medium or via a communication method.

### Advantageous Effects of Invention

According to the present disclosure described above, a moving picture processing device capable of generating a cut composition image allowing one to easily grasp the cut composition of a moving picture, a moving picture processing method, and a program can be provided.

### Brief Description of Drawings

[Fig. 1] Fig. 1 is a flow diagram showing a procedure for a moving picture processing method according to an embodiment of the present disclosure.
[Fig. 2] Fig. 2 is a block diagram showing the configuration of a moving picture processing device.
[Fig. 3] Fig. 3 is a flow diagram showing an overall operation procedure for the moving picture processing device.
[Fig. 4] Fig. 4 is a diagram exemplifying a cut composition.
[Fig. 5] Fig. 5 is a flow diagram showing a procedure for identifying a cut pair.
[Fig. 6] Fig. 6 is a diagram exemplifying cut pair identification results.
[Fig. 7] Fig. 7 is a diagram exemplifying a cut composition array.
[Fig. 8] Fig. 8 is a flow diagram showing a display optimization procedure of the cut composition.
[Fig. 9A] Fig. 9A is a diagram (1/3) showing the display optimization procedure of the cut composition.
[Fig. 9B] Fig. 9B is a diagram (2/3) showing the display optimization procedure of the cut composition.
[Fig. 9C] Fig. 9C is a diagram (3/3) showing the display optimization procedure of the cut composition.
[Fig. 10] Fig. 10 is a flow diagram showing the procedure for generating cut pairs.
[Fig. 11] Fig. 11 is a diagram showing the procedure for generating two cut pairs.
[Fig. 12] Fig. 12 is a diagram exemplifying conditions for generating cut pairs.
[Fig. 13] Fig. 13 is a diagram exemplifying the procedure for generating cut pairs based on the number of frames of the cut pair in a first generation procedure.
[Fig. 14] Fig. 14 is a diagram exemplifying the procedure for generating cut pairs based on the number of frames of the cut in the first generation procedure.
[Fig. 15] Fig. 15 is a diagram exemplifying the procedure for generating cut pairs based on volume fluctuations between cuts in the first generation procedure.
[Fig. 16] Fig. 16 is a diagram exemplifying the procedure for generating cut pairs based on the number of frames of the cut pair in a second generation procedure.
[Fig. 17] Fig. 17 is a diagram exemplifying the procedure for generating cut pairs based on the number of frames of the cut in the second generation procedure.
[Fig. 18] Fig. 18 is a diagram exemplifying the procedure for generating cut pairs based on volume fluctuations between cuts in the second generation procedure.
[Fig. 19] Fig. 19 is a diagram exemplifying the procedure for generating cut pairs based on an image brightness histogram between cuts in the second generation procedure.
[Fig. 20] Fig. 20 is a diagram exemplifying calculation results of similarities of feature amounts between cuts.
[Fig. 21] Fig. 21 is a diagram (1/2) exemplifying the procedure for generating cut pairs based on an inner product of similarity matrices.
[Fig. 22] Fig. 22 is a diagram (2/2) exemplifying the procedure for generating cut pairs based on the inner product of similarity matrices.
[Fig. 23] Fig. 23 is a diagram exemplifying the procedure for generating cut pairs based on a scalar value of the similarity matrix.
[Fig. 24] Fig. 24 is a diagram exemplifying a cut composition image.
[Fig. 25] Fig. 25 is a diagram showing corrections of the cut composition image based on a contrast ratio.

### Description of Embodiments

Hereinafter, preferred embodiments of the present invention will be described in detail with reference to the appended drawings. Note that, in this specification and the drawings, elements that have substantially the same function and structure are denoted with the same reference signs, and repeated explanation is omitted.

### [1. Overview of Moving Picture Processing Method]

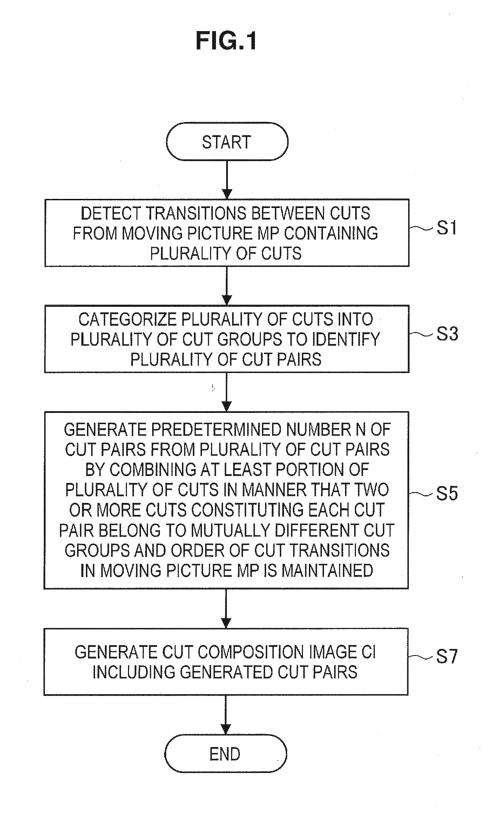

First, an overview of a moving picture processing method according to an embodiment of the present disclosure will be described with reference to Fig. 1. Fig. 1 shows a procedure for a moving picture processing method according to an embodiment of the present disclosure.

In the moving picture processing method according to an embodiment of the present disclosure, as shown in Fig. 1, transitions between cuts are first detected from a moving picture MP containing a plurality of cuts (step S1). Next, the plurality of cuts is categorized into a plurality of cut groups having different feature amounts S (generic term for feature amounts of cut groups) to identify a plurality of cut pairs comprised of two or more sequential cuts belonging to different cut groups and repeated in the moving picture MP (step S3).

Then, at least a portion of the plurality of cuts is combined to generate a predetermined number N of cut pairs from the plurality of cut pairs so that the cut pairs comprised of two or more sequential cuts belong to mutually different cut groups and the content of cut transitions in the moving picture MP is maintained (step S5). The number N of cut pairs is preset in accordance with display conditions (such as the display range and display size) of a cut composition image CI (generic term for cut composition images). Further, the cut composition image CI comprised of generated cut pairs is generated (step S7).

Accordingly, the cut composition image CI capable of maintaining at-a-glance visibility of the cut composition and visibility of the cut composition image CI can be generated by generating the predetermined number N of cut pairs by combining at least a portion of a plurality of cuts so that predetermined conditions are satisfied and generating the cut composition image CI comprised of generated cut pairs. Then, the user can easily grasp the cut composition of the moving picture MP through the cut composition image CI generated as described above.

### [2. Moving Picture Processing Device 1]

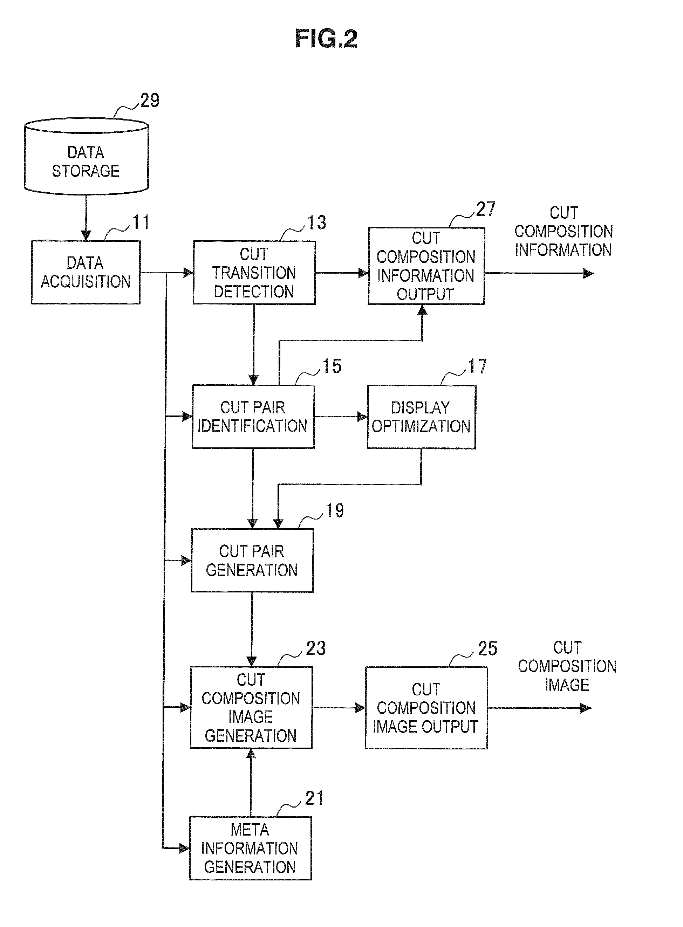

Next, a moving picture processing device 1 according to an embodiment of the present disclosure will be described with reference to Fig. 2. Fig. 2 shows a main function configuration of the moving picture processing device 1. As shown in Fig. 2, the moving picture processing device 1 includes a data acquisition unit 11, a cut transition detection unit 13, a cut pair identification unit 15, a display optimization unit 17, a cut pair generation unit 19, a meta information generation unit 21, a cut composition image generation unit 23, a cut composition image output unit 25, a cut composition information output unit 27, and a data storage unit 29.

The data acquisition unit 11 acquires moving picture data MP containing a plurality of cuts to supply the moving picture data MP to the cut transition detection unit 13, the cut pair identification unit 15, the cut pair generation unit 19, the meta information generation unit 21, and the cut composition image generation unit 23. The moving picture data MP is generally data in frame format and may be image data only or may be combined with audio data. The moving picture data MP may be acquired from the data storage unit 29 or an external device (not shown).

The cut transition detection unit 13 detects cut transitions in the moving picture MP based on the moving picture data MP and supplies detection results to the cut pair identification unit 15 and the cut composition information output unit 27. The cur transition means a change of cuts in the moving picture MP. The cut transition is detected based on similarities of feature amounts determined for images and/or audios in succeeding frames. As a feature amount of an image and/or audio, a color histogram, facial image detection, correlation between images and/or a sound volume, tone/rhythm and the like can be used. Feature amounts determined for detecting cut transitions may be stored in the data storage unit 29 for use in other processing.

Though details will be described later, the cut pair identification unit 15 categorizes the plurality of cuts into cut groups based on feature amounts S' of each cut. Identification results of cut pairs are supplied to the display optimization unit 17, the cut pair generation unit 19, and the cut composition information output unit 27 together with detection results of cut transitions. As the feature amount S' of a cut, a color histogram of an image contained in the cut, facial image detection, correlation between images and/or a sound volume, tone/rhythm and the like or a combination of these can be used. The feature amounts S' determined for identifying cut pairs may be stored in the data storage unit 29 for use in other processing.

The cut group means a combination of cuts having the feature amounts S' similar to each other. The cut pair means a combination of a series of mutually different cuts repeated in a cut combination and is comprised of two or more temporally sequential cuts. The cut pair identification unit 15 attaches attribute information (a group ID, pair ID or the like described later) representing the cut group or cut pair to each cut based on identification results of cut pairs. The attribute information may be supplied to, in addition to the display optimization unit 17 and the cut pair generation unit 19, the cut composition information output unit 27, the data storage unit 29 and external devices.

Though details will be described later, the display optimization unit 17 optimizes the display of the cut composition image CI in accordance with display conditions (such as the display range and display size) of the cut composition image CI. More specifically, the number N of cut pairs displayed as the cut composition image CI is optimized to an optimal display number Nopt to maintain visibility of the cut composition image CI along with at-a-glance visibility of the cut composition. Optimization results are supplied to the cut pair generation unit 19.

Though details will be described later, the cut pair generation unit 19 generates cut pairs displayed as the cut composition image CI in accordance with cut pair identification results and display optimization results. More specifically, cut pairs are generated so that the optimal cut pair number Nopt is satisfied based on the feature amounts S' of cuts according to generation conditions for cut pairs. Cut pair generation results are supplied to the cut composition image generation unit 23, but may also be supplied to the cut composition information output unit 27, the data storage unit 29 and external devices.

The meta information generation unit 21 generates meta information MI (generic term for meta information) showing features of audio and images contained in each cut. The meta information generation unit 21 extracts audio or image features from the moving picture data MP based on the moving picture data MP and detection results of cut transitions. Then, the meta information MI showing audio or image features of each cut is generated and supplied to the cut composition image generation unit 23.

The cut composition image generation unit 23 generates the cut composition image CI based on the moving picture data MP and cut pair generation results. The cut composition image CI is an image in which representative images I of cuts contained in a generated cut pair are arranged in the order of cut transitions while the boundary of cut pairs being specified. In the generation of the cut composition image CI, the representative image I is extracted from images contained in cuts of a generated cut pair according to predetermined criteria. The cut composition image CI may contain the meta information MI supplied by the meta information generation unit 21. The representative image I is an image that represents each cut and is extracted, for example, as an image corresponding to the center frame of the cut. The cut composition image CI is supplied to the cut composition image output unit 25.

The cut composition image output unit 25 outputs the cut composition image CI supplied by the cut composition image generation unit 23 so that the user can grasp the cut composition of the moving picture MP. The cut composition image CI may be output to a display device, printing device, storage device, or external device (none of these devices shown) connected to the moving picture processing device 1.

The cut composition information output unit 27 outputs cut transition detection results, cut categorization results, or cut pair identification results as cut composition information so that the user can use the information to grasp the cut composition. The cut composition information may be output to a display device, printing device, storage device, or external device (none of these devices shown) connected to the moving picture processing device 1.

The cut composition information can be used, for example, as data to realize a moving picture search in consideration of the cut composition. For example, some cut may be set as a reference cut to search for a cut paired with the reference cut or some cut pair may be set as a reference cut pair to search for a cut pair composed in the same manner as the reference cut pair. Also, the moving picture MP containing many cut pairs or the moving picture MP containing many cutbacks can be searched for.

The data storage unit 29 stores the moving picture data MP and data attached to the moving picture data MP. The data storage unit 29 has cut composition information stored by being associated with the moving picture data MP. Incidentally, the cut composition image CI may be stored in the data storage unit 29. In Fig. 2, the marking of connection of the data storage unit 29 with other components is partially omitted.

In the above function configuration, the data acquisition unit 11, the cut transition detection unit 13, the cut pair identification unit 15, the display optimization unit 17, the cut pair generation unit 19, the meta information generation unit 21, the cut composition image generation unit 23, the cut composition image output unit 25, and the cut composition information output unit 27 are configured as a processing unit such as a CPU DSP (digital signal processor) or the like. The data storage unit 29 is configured by an internal storage device such as a flash memory or an external storage device such as a hard dusk drive or blu-ray disk dive. The CPU realizes the moving picture processing method by expanding a program read from a ROM or the like on a RAM and executing the program. The above function configuration may at least partially be configured as hardware such as a dedicated logic circuit.

### [3. Procedure for Generating Cut Composition Array Mo]

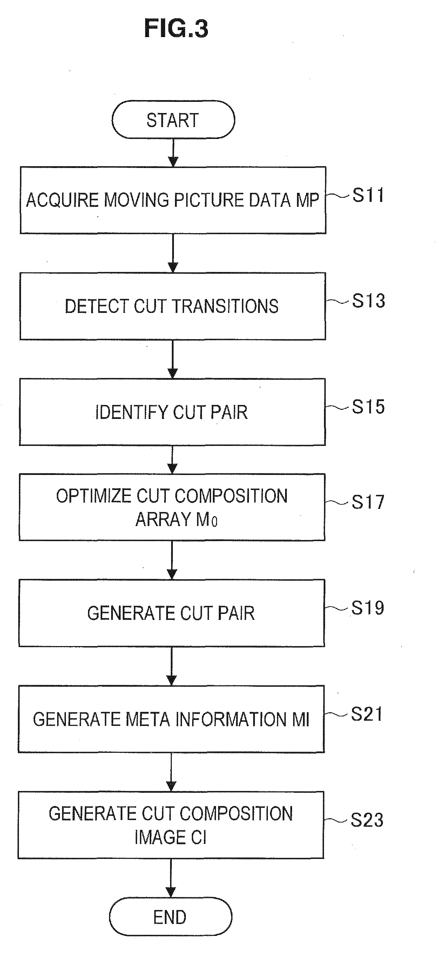

Next, the procedure for generating a cut composition array M₀ will be described with reference to Figs. 3 to 7. Fig. 3 shows an overall operation procedure for the moving picture processing device 1.

As shown in Fig. 3, the data acquisition unit 11 first acquires the moving picture data MP (step S11) and supplies the moving picture data MP to the cut transition detection unit 13. The cut transition detection unit 13 detects cut transitions in the moving picture data MP based on the moving picture data MP (step S13) and supplies detection results to the cut pair identification unit 15. The cut transition is detected based on similarities of feature amounts of images and/or audios in succeeding frames. A serial number showing the order cut transitions is attached to each cut as the cut ID.

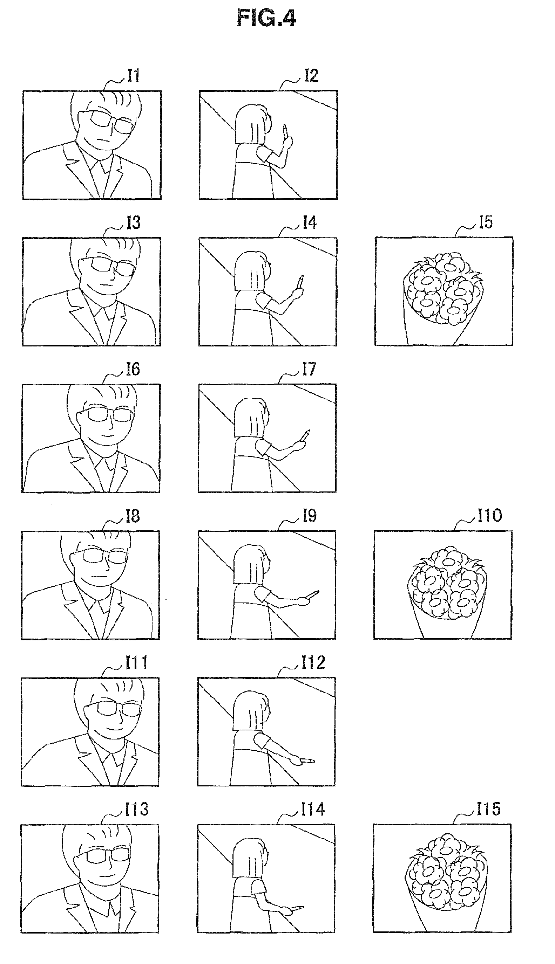

Fig. 4 exemplifies the cut composition determined from cut transition detection results. The cut composition is shown by using representative images I1 to I15 of cuts 1 to 15 to facilitate the understanding. As shown in Fig. 4, the cuts 1, 3, 6, 8, 11, 13 are similar to each other, the cuts 2, 4, 7, 9, 12, 14 are similar to each other, and the cuts 5, 10, 15 are similar to each other.

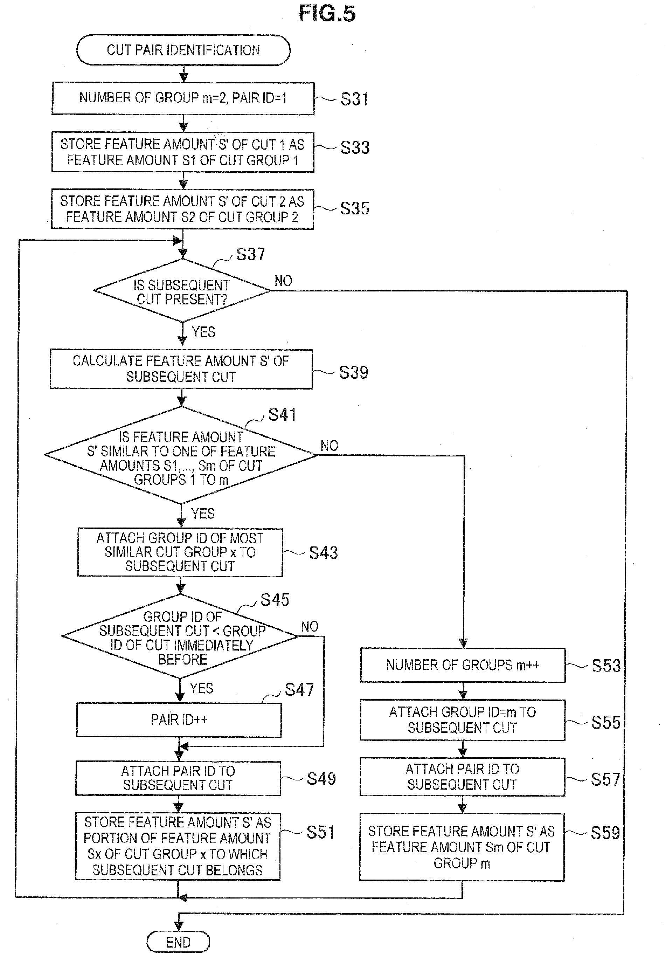

Next, the cut pair identification unit 15 performs cut pair identification processing to identify a cut pair by categorizing each cut into cut groups. Fig. 5 shows a procedure for cut pair identification processing. In the cut pair identification processing, as shown in Fig. 5, initialization processing is first performed (step S31). In the initialization processing, a group number m and a pair ID are initialized (m=2, pair ID=1). A group ID=1 and a group ID=2 are attached to the cuts 1, 2 respectively and the pair ID=1 is attached to the cuts 1, 2.

The group number m shows the number of cut groups (the cut groups 1, 2 are identified during initialization processing) identified from the moving picture data MP. The group ID and the pair ID are attached to each cut to indicate the group ID and the pair ID to which each cut belongs.

Next, the feature amount S' of the cut 1 is calculated and stored in the data storage unit 29 or the like as a feature amount S1 of a cut group 1 (step S33). Similarly, the feature amount S' of the cut 2 is calculated and stored in the data storage unit 29 or the like as a feature amount S2 of a cut group 2 (step S35). The feature amount S of a cut group (generic term for the feature amount of a cut group) is calculated as a color histogram, facial image detection, correlation between images and/or a sound volume, tone/rhythm and the like or a combination of these.

Next, whether the subsequent cut to be processed is present is checked (step S37). If the subsequent cut is present ("Yes" in step S37), the feature amount S' of the subsequent cut is calculated (step S39) and the similarity between the feature amount S' of the subsequent cut and feature amounts S1 to Sm of cut groups 1 to m is determined (step S41). When similarities are determined, similarities between the feature amounts S may preferentially be determined to a cut group having a larger group ID than that of a cut immediately before. This is because when belonging to the same cut pair, the group ID of a cut group to which a subsequent cut belongs becomes larger than that of a cut group to which a cut immediately before belongs.

If the similarity between the feature amount S' of the subsequent cut and one of the feature amounts S1 to Sm of the cut groups 1 to m is determined to be equal to a predetermined threshold or more ("Yes" in step step S41), the group ID of the cut group x (1≦x≦m) of the highest similarity is attached to the subsequent cut (step S43).

The group ID of the subsequent cut and that of the cut immediately before are compared (step S45) and if the former is smaller, the pair ID is incremented by 1 (step S47). In this case, the cut immediately before and the subsequent cut belong to different cut pairs and a boundary (cutback point) between cut pairs is present between both cuts. The previous pair ID or the incremented pair ID is attached to the subsequent cut (step S49). The feature amount S' of the subsequent cut may be stored and used as a portion of the feature amount Sx of the cut group x or may be discarded (step S51).

On the other hand, if the similarity between the feature amount S' of the subsequent cut and all of the feature amounts S1 to Sm of the cut groups 1 to m is determined to be less than a predetermined threshold ("No" in step S41), the group number m is incremented by 1 to generate a new cut group (step S53). The group ID corresponding to the group number m as a new cut group is attached to the subsequent cut (step S55). The previous pair ID is attached to the subsequent cut (step S57). The feature amount S' of the subsequent cut is stored and used as the feature amount Sm of the new cut group m (step S59).

The processing in steps S37 to S59 is repeated until the subsequent cut no longer exists ("No" in step S37). Then, if no subsequent cut exists, the cut pair identification processing terminates and, as shown in Fig. 3, the processing in step S 17 continues to be performed.

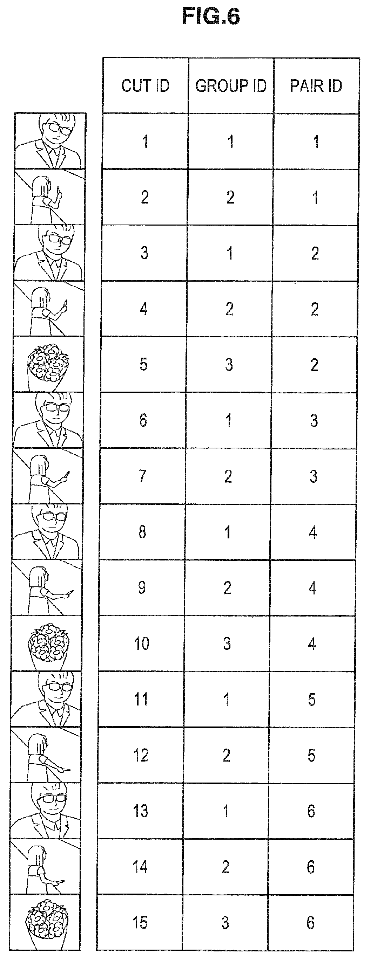

Fig. 6 shows cut pair identification results for the cut configuration shown in Fig. 4. As shown in Fig. 6, the group ID=1 is attached to the cuts 1, 3, 6, 8, 11, 13, the group ID=2 is attached to the cuts 2, 4, 7, 9, 12, 14, and the group ID=3 is attached to the cuts 5, 10, 15 based on similarities of the feature amount S' of each cut. Also based on the order of cut transitions, the pair IDs=1 to 6 are attached the cuts 1 to 15 and the cuts 1, 2, the cuts 3 to 5, the cuts 6, 7, the cuts 8 to 10, the cuts 11, 12, and the cuts 13 to 15 are each identified as cut pairs 1 to 6 repeated as a series of mutually different cuts.

When the identification of cut pairs terminates, the display optimization unit 17 optimizes the cut composition array M₀ based on cut pair identification results (step S 17). The display optimization unit 17 first generates the cut composition array Mo. The cut composition array M₀ is information to arrange each cut in a matrix form based on the appearance order of cut pairs in the moving picture MP and the appearance order of cuts in each cut pair.

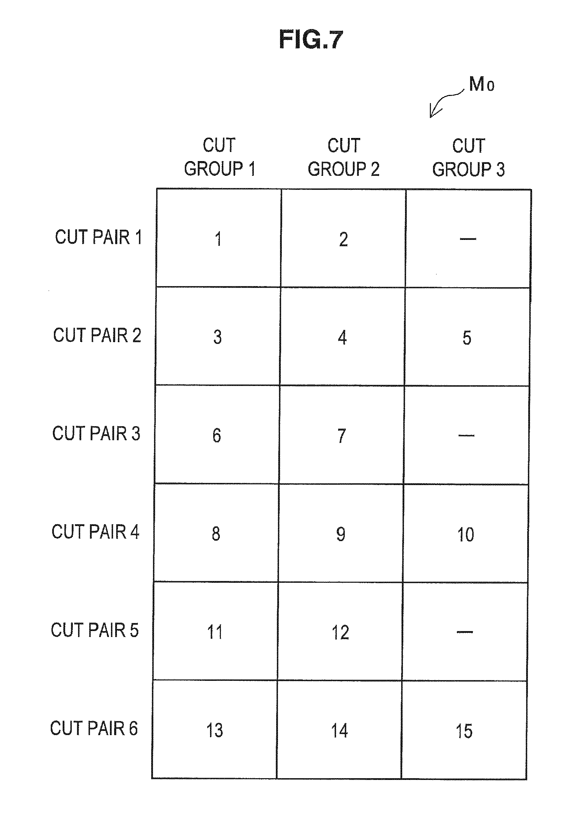

Fig. 7 shows the cut composition array M₀ generated from cut pair identification results shown in Fig. 6. In Fig. 7, the cut ID is shown in the cut composition array M₀. In the cut composition array M₀ shown in Fig. 7, the cuts 1, 2 are arranged horizontally, the cuts 3 to 5 are arranged horizontally below the cuts 1, 2, and similarly, the cuts 6, 7, the cuts 8 to 10, the cuts 11, 12, and the cuts 13 to 15 are arranged.

That is, the cuts 1 to 15 are arranged in a matrix form in which the appearance order of cut pairs (pair ID) in the moving picture MP is set in a first direction (vertical direction) and the appearance order of cuts (group ID) in each cut pair is set in a second direction (horizontal direction). The combination of the first direction and the second direction may be, instead of a combination of the vertical direction and the horizontal direction, a combination of the horizontal direction and the vertical direction.

### [4. Procedure for Optimizing Cut Composition Array M₀]

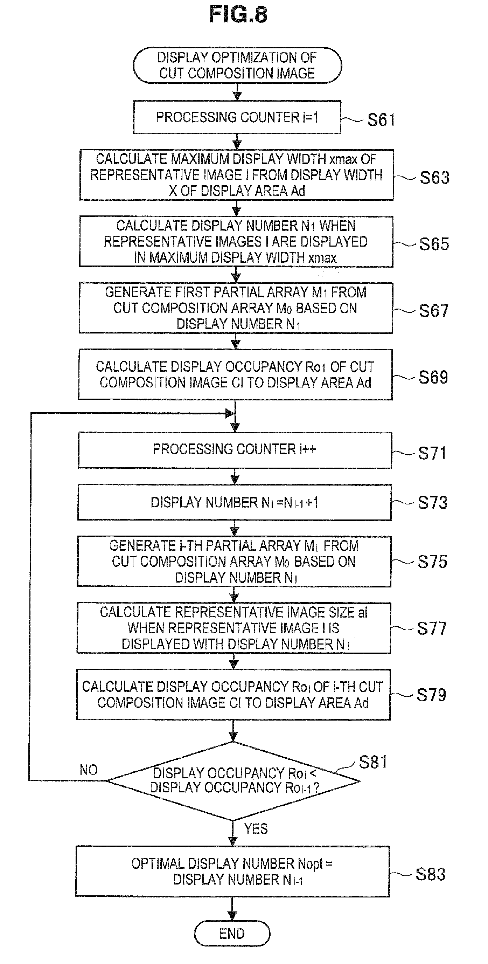

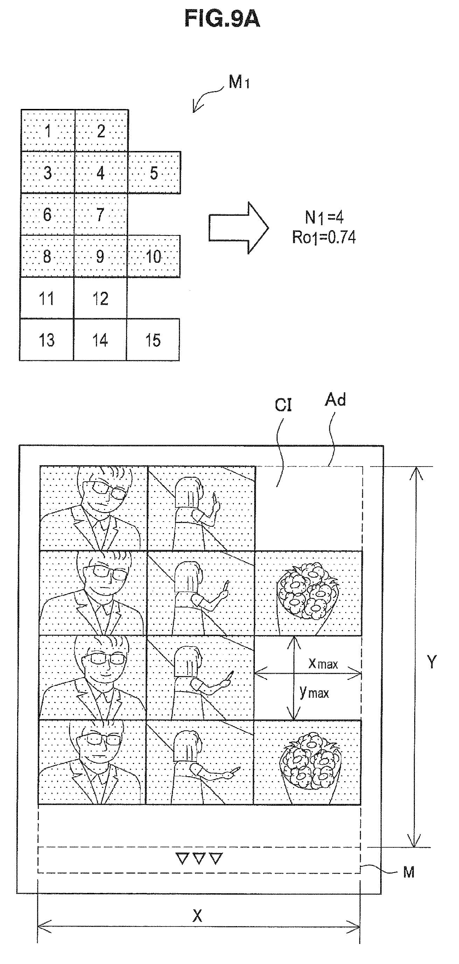

Next, the procedure for optimizing the cut composition array M₀ will be described with reference to Figs. 8 and 9A to 9C. Fig. 8 shows the procedure for optimizing the cut composition array M₀.

A case when the cut composition array M₀ shown in Fig. 7 is optimized for a predetermined display area Ad will be described below. The display area Ad is assumed to have a display height (number of pixels) Y in the first direction, a display width (number of pixels) X in the second direction, and a display range size A (= X × Y). The representative image I of each cut is assumed to have a full-size height (number of pixels) yo in the first direction, a full-size width (number of pixels) x₀ in the second direction, a representative image size a₀ (= x₀ × y₀), and an aspect ratio Ra = x₀ / y₀.

As shown in Fig. 8, a processing counter i is first initialized (i=1) (step S61). Next, a maximum display width xmax of the representative image I is calculated from the display width X of the display area Ad (step S63). The maximum display width xmax is calculated by dividing the display width X of the display area Ad by the group number m (xmax=X/m). If the maximum display width xmax of the representative image I is larger than the full-size width x₀, the maximum display width xmax may be set to the full-size width x₀.

Next, a display number N₁ of cut pairs when the representative image I is displayed in the maximum display width xmax is calculated (step S65). The display number N₁ is calculated by dividing the display height Y of the display area Ad by a maximum display height ymax of the representative image I (N₁=Y/yma). The maximum display height ymax is calculated by dividing the maximum display width xmax by the aspect ratio Ra (ymax=xmax/Ra). The display number N₁ is calculated as a value obtained by discarding all digits to the right of the decimal point.

Next, a first partial array M₁ is generated from the cut composition array M₀ based on the display number N₁ of cut pairs (step S67). The partial array is an array obtained by partially extracting from the cut composition array M₀. ]The first partial array M₁ is generated as an array containing all cuts in the cut pairs 1 to N₁ and the total number of cuts contained in the array becomes a total cut number n₁ in the first partial array M₁.

Next, a display occupancy Ro₁ of a first cut composition image CI to the display area Ad is calculated (step S69). The display occupancy Ro₁ of the first cut composition image CI is calculated (Ro₁=a₁×n₁/A) by dividing by the display range size A a value obtained by multiplying the total cut number n₁ in the first partial array M₁ by the representative image size (a₁=xmax×ymax).

Next, the processing counter i is incremented by 1 (step S71) and a display number Nᵢ is incremented by 1 (step S73). Next, an i-th partial array Mᵢ is generated from the cut composition array M₀ based on the display number Nᵢ of cut pairs (step S75). The i-th partial array Mᵢ is generated as an array containing all cuts in the cut pairs 1 to Nᵢ.

Next, a representative image size aᵢ when the representative image I is displayed with the display number Nᵢ (step S77). The representative image size aᵢ is calculated by multiplying the display height yᵢ by the display width xᵢ when the representative image I is displayed with the display number Nᵢ (aᵢ=xᵢ×yᵢ). The display height yᵢ is calculated by dividing the display height Y of the display area Ad by the display number Nᵢ (yᵢ=Y/Nᵢ) and the display width xᵢ is calculated by multiplying the display height yᵢ by the aspect ratio Ra (xᵢ=yᵢ×Ra).

Next, a display occupancy Roᵢ of an i-th cut composition image CI to the display area Ad is calculated (step S79). The display occupancy Roᵢ of the i-th cut composition image CI is calculated (Roᵢ=aᵢ×nᵢ/A) by dividing by the display range size A a value obtained by multiplying the total cut number nᵢ in the i-th partial array Mᵢ by the representative image size aᵢ.

Next, whether the calculated display occupancy Roᵢ is smaller than the display occupancy Roᵢ₋₁ calculated in the processing (processing by the processing counter i-1) immediately before (step S81). Then, if the determination result is affirmative ("Yes" in step S81), the display number Nᵢ₋₁ becomes the optimal display number Nopt (step S83). As a result, the (i-1)-th partial array Mᵢ₋₁ is decided as the optimized cut composition array.

On the other hand, if the determination result is negative ("No" in step S81), the processing returns to step S71. Then, the display number Nᵢ₊₁ corresponding to the next processing counter i+1 is set to repeat the processing in steps S71 to S81 until the determination result in step S81 becomes affirmative.

According to the above procedure, the display size aᵢ of the representative image I decreases with the increasing display number Nᵢ. Thus, a minimum display height ymin of the representative image I may be preset to determine whether the display height yᵢ of the representative image I calculated from the display number Nᵢ is less than the minimum display height ymin. Then, if the determination result is affirmative, the optimization processing may be aborted to set the display number N₁ of the first partial array M₁ with which the display occupancy Roᵢ takes the maximum value as the maximum display number Nopt.

Figs. 9A to 9C show optimization processing results for the cut configuration shown in Fig. 4. As shown in Fig. 9A, the first partial array M₁ has the display number N₁=4 and includes the cuts 1 to 10 contained in the cut pairs 1 to 4. In this case, the number of groups of the cut composition is m=3 and thus, as shown in Fig. 9A, representative images I1 to I10 of the cut groups 1 to 3 are displayed fully in the display width X of the display area Ad as the cut composition image CI. Then, the display occupancy of the first partial array M₁ is calculated as Ro₁=0.74.

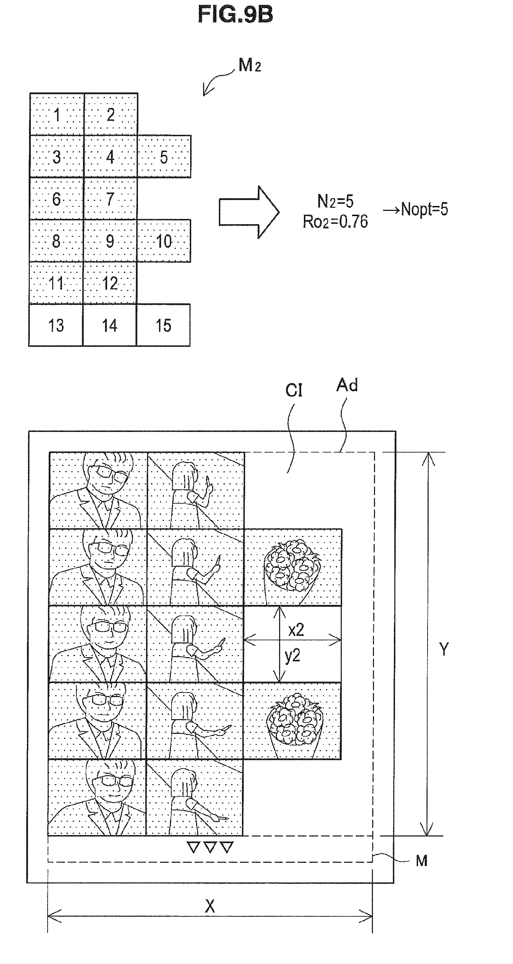

As shown in Fig. 9B, the second partial array M₂ has the display number N₂=5 and includes the cuts 1 to 12 contained in the cut pairs 1 to 5. In this case, as shown in Fig. 9B, representative images I1 to I12 of the cut pairs 1 to 5 are displayed fully in the display height Y of the display area Ad as the cut composition image CI. Then, the display occupancy of the second partial array M₂ is calculated as Ro₂=0.76. Because Ro₁(=0.74)<Ro₂(=0.76) holds, the optimization processing will continue.

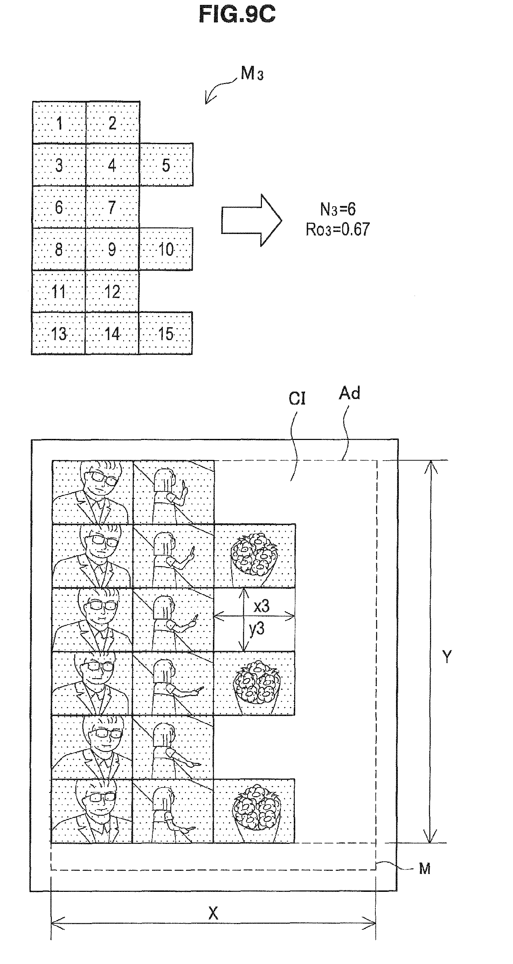

As shown in Fig. 9C, the third partial array M₃ has the display number N₃=6 and includes the cuts 1 to 15 contained in the cut pairs 1 to 6. In this case, as shown in Fig. 9C, representative images I1 to I15 of the cut pairs 1 to 6 are displayed fully in the display height Y of the display area Ad as the cut composition image CI. Then, the display occupancy of the third partial array M₃ is calculated as Ro₃=0.67. Because Ro₃(=0.67)<Ro₂(=0.76) holds, the second partial array M₂ becomes the optimal cut composition array. Thus, the optimal display number Nopt becomes the display number N₂=5.

In Figs. 9A and 9B, all the cut pairs 1 to 6 in the cut composition array M₀ are not displayed and thus, a mark M indicating the presence of cut pairs that are not displayed is displayed below the display area Ad.

According to the moving picture processing method according to the present embodiment, as described above, the cut composition image CI capable of maintaining at-a-glance visibility of the cut composition and visibility of the cut composition image CI by adjusting the number N of cut pairs so that the display occupancy Ro to the display area Ad is maximized and generating the cut composition image CI satisfying the adjusted number N of cut pairs.

As has been described with reference to Figs. 9A to 9C, an optimal array may not necessarily contain all cut compositions in the moving picture MP due to constraints of display conditions. Thus, if the cut composition image CI is generated according to the optimal array, the cut composition in the moving picture MP may not be appropriately represented. Therefore, as will be described below, the cut composition image CI is generated after cut pairs are generated by sorting cuts from the cut composition array M₀ so that the optimal array (optimal display number Nopt) is satisfied.

When the display optimization processing is completed, as shown in Fig. 3, the cut pair generation unit 19 cut pairs of the optimal display number Nopt are generated from a plurality of cut pairs (step S19). Cut pairs are generated by combining at least a portion of the plurality of cuts so that two or more cuts constituting each cut pair belong to mutually different cut groups and the context of cut transitions in the moving picture MP is maintained.

### [5. Procedure for Generating Cut Pair]

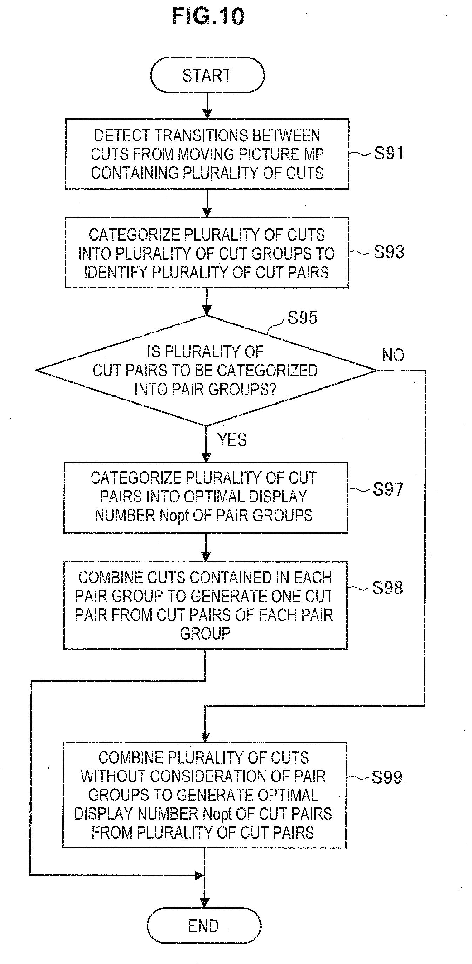

Next, the procedure for generating cut pairs will be described with reference to Figs. 10 to 25. Fig. 10 shows the procedure for generating cut pairs.

For the generation of cut pairs, cut transitions are detected and cut pairs are identified in advance. In the detection of cut transitions, as described above, transitions between cuts are detected from the moving picture MP containing a plurality of cuts (step S91). In the identification of cut pairs, the plurality of cuts is categorized into a plurality of cut groups having different feature amounts S to identify a plurality of cut pairs comprised of two or more sequential cuts belonging to different cut groups and repeated in the moving picture MP (step S93).

In the identification of cut pairs, cut pairs in the cut composition array M₀ may be categorized into pair groups to generate cut pairs from each pair group (first generation procedure) or cut pairs may be generated directly from the cut composition array M₀ without categorizing cut pairs into cut groups (second generation procedure). Thus, in the generation of cut pairs, whether to select the first generation procedure is first determined (step S95).

Then, if the determination result is affirmative ("Yes" in step S95), cut pairs in the cut composition array M₀ are categorized into pair groups of the optimal display number Nopt based on feature amounts of cuts or cut pairs (step S97). Next, at least a portion of cuts contained in each pair group is combined to generate one cut pair from cut pairs contained in each pair group (step S98). Cuts are combined so that two or more cuts constituting each cut pair belong to mutually different cut groups and the context of cut transitions in the moving picture is maintained.

On the other hand, if the determination result is negative ("No" in step S95), at least a portion of the plurality of cuts is combined without consideration of pair groups to generate cut pairs of the optimal display number Nopt from the plurality of cut pairs (step S99). Cuts are combined also here so that two or more cuts constituting each cut pair belong to mutually different cut groups and the context of cut transitions in the moving picture is maintained.

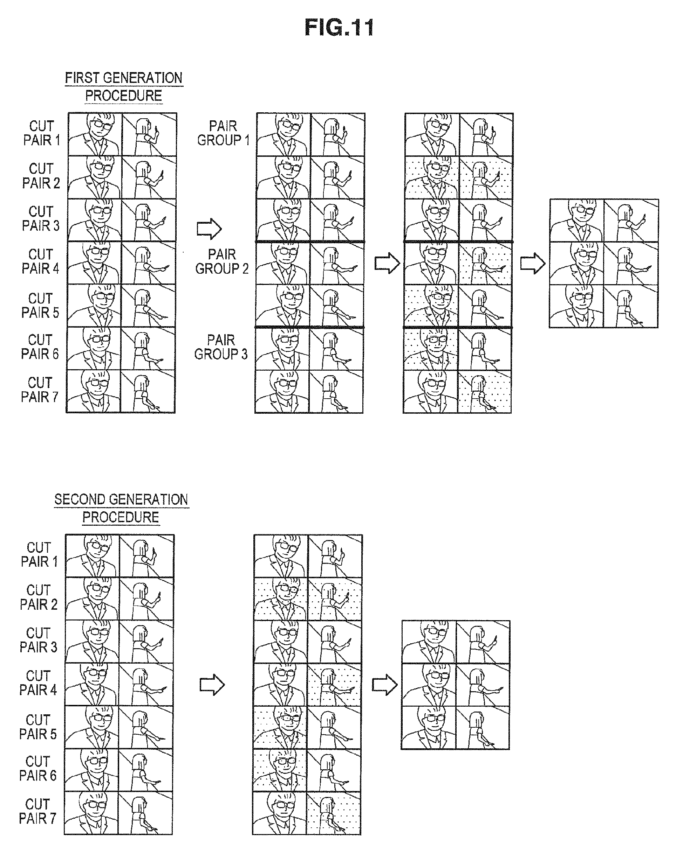

A case when cut pairs are generated from the cut pairs 1 to 7 so that the optimal display number Nopt=3 is satisfied will be described below with reference to Figs. 11 to 25. Moving picture data MP that is different from the moving picture data MP used in Figs. 4 to 9 will be used below for description.

Fig. 11 shows generation examples of the cut composition image CI according to two generation procedures. In the first generation procedure, the cut pairs 1 to 7 in the cut composition array M₀ are categorized into the pair group 1 (cut pairs 1 to 3), the pair group 2 (cut pairs 4, 5), and the pair group 3 (cut pairs 6, 7). Next, the cuts 3, 4 are sorted from the pair group 1, the cuts 8, 9 are sorted from the pair group 2, and the cuts 11, 14 are sorted from the pair group 3. In Fig. 11, sorted cuts are hatched. In the second generation procedure, on the other hand, the cuts 3, 4, 8, 9, 11, 14 are directly sorted from the cut composition array M₀ without categorizing the cut pairs 1 to 7 into pair groups.

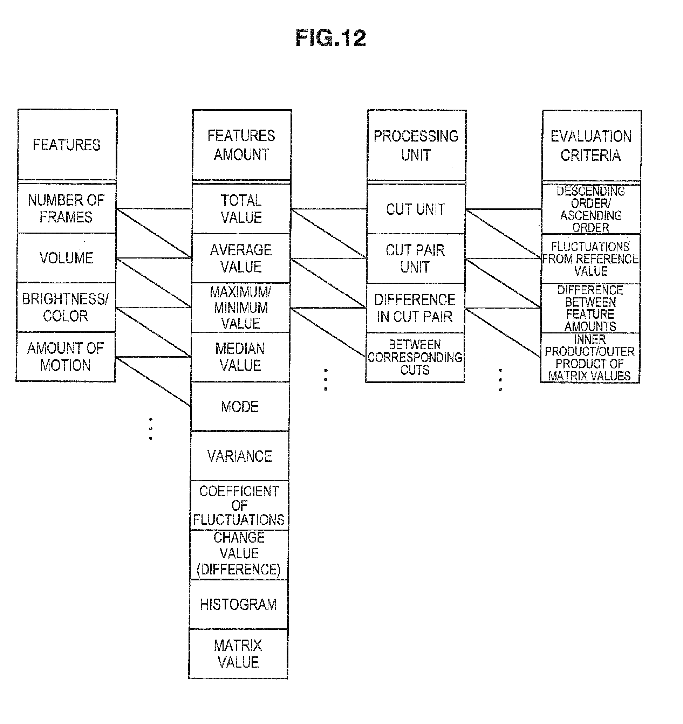

Fig. 12 exemplifies conditions for generating cut pairs. Cut pairs are generated from the cut composition array M₀ according to conditions for generating cut pairs shown in Fig. 12. Features of a cut include the number of frames of images of the cut, volume of the sound of the cut, brightness/color of images of the cut, and amount of motion of images of the cut. Amounts of features include the total value, average value, maximum/minimum value, median, mode, variance, coefficient of fluctuations, change value (difference), histogram, and matrix value. Processing units of feature amounts include the cut unit, cut pair unit, difference in a cut pair, and between corresponding cuts. Evaluation criteria of feature amounts include the descending order/ascending order of feature amounts, fluctuations from a reference value, difference between sequential feature amounts, and inner product/outer product of matrix values.

Conditions for generating cut pairs are formed, for example, by appropriately combining the cut feature, feature amount, processing unit, and evaluation criteria like "number of frames" as the cut feature, "total value" as the feature amount, "cut pair unit" as the processing unit, and "ascending order of the feature amount" as the evaluation standard. The above cut features, feature amounts, processing units, and evaluation criteria are only examples and do not mean that all combinations are always possible. Generation processing of cut pairs will be described below by taking some generation conditions as an example.

First, a case when cut pairs are generated from the cut pairs 1 to 7 so that the optimal display number Nopt=3 is satisfied according to the first generation procedure will be described. Processing conditions and the cut configuration shown below are only examples to describe the generation processing of cut pairs.

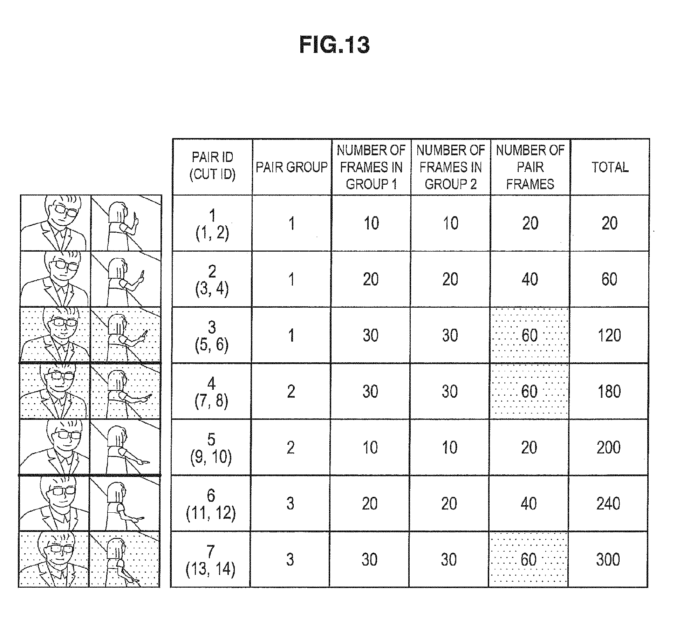

Fig. 13 shows an example in which cut pairs are generated based on the numbers of frames of cut pairs. First, the cut pairs 1 to 7 are categorized into the pair groups 1 to 3 based on the number of frames of the cut pairs 1 to 7 (see the term of Pair group). The cut pairs 1 to 7 are categorized so that the total number of frames of cut pairs contained in each pair group becomes approximately equal. In the above example, the cut pairs 1 to 7 are categorized so that the total numbers of frames contained in the pair groups 1, 2, 3 are 120, 80, 100 respectively (see the item of Total). Next, the cut pair with the maximum number of frames is sorted from cut pairs contained in each of the pair groups 1 to 3. In the above example, the cut pairs 3, 4, 7 are sorted for the pair groups 1, 2, 3 respectively (see the item of Number of pair frames)Thus, three cut pairs comprised of the cut pairs 3, 4, 7 are generated to generate the cut composition image CI.

The cut pairs 1 to 7 may be categorized based on the number of cut pairs, instead of the number of frames. In this case, the cut pairs 1 to 7 may be categorized into, for example, the cut pairs 1, 2, the cut pairs 3, 4, and the cut pairs 5 to 7 so that the number of cut pairs contained in each pair group becomes approximately equal. Also instead of the cut pair with the maximum number of frames, the cut pair with the minimum number of frames or the median cut pair may be sorted out.

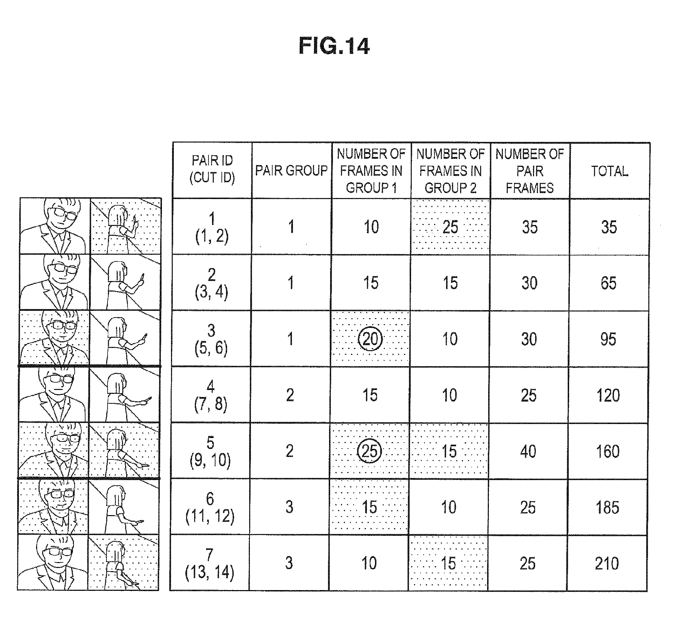

Fig. 14 shows an example in which cut pairs are generated based on the numbers of frames of cuts. First, the cut pairs 1 to 7 are categorized into the pair groups 1 to 3 based on the numbers of framers of the main cuts (cuts 1, 3, 5, 7, 9, 11, 13) belonging to the cut group 1.

More specifically, for the categorization of pair groups, two main cuts with the largest two numbers of frames are selected from all main cuts. In the above example, the main cuts 5, 9 with the numbers of frames 20, 25 are selected (see the item of Number of frames in the group 1). Then, the cut pairs 1 to 7 are categorized into the pair groups 1 to 3 by using the positions of the selected main cuts as delimiters. In this case, the positions of the main cuts 5, 9 are used as delimiters in the above example to categorize the cut pairs 1 to 3, the cut pairs 4, 5, and the cut pairs 6, 7 into the pair groups 1, 2, 3 respectively (see the item of Pair group).

Next, the main cut with the maximum number of frames is sorted from main cuts belonging to the cut group 1 for each of the cut groups 1 to 3. In the above example, the main cuts 5, 9, 11 are sorted from the pair groups 1, 2, 3 respectively (see the item of Number of frames in the group 1).

Next, the sub-cut with the maximum number of frames is sorted from sub-cuts (cuts, 2, 4, 6, 8, 10, 12, 14) belonging to the cut group 2 for each of the cut groups 1 to 3. In the above example, sub-cuts 2, 10, 14 are sorted for the pair groups 1, 2, 3 respectively (see the item of Number of frames in the group 2). Thus, a cut pair comprised of the cuts 2, 5, a cut pair comprised of the cuts 9, 10, and a cut pair comprised of the cuts 11, 14 are generated to generate the cut composition image CI.

In this case, because the order of cut transitions are reversed between the main cut 5 and the sub-cut 2 (cut ID of the main cut>cut ID of the sub-cut), the sub-cut 6 may be sorted out, instead of the sub-cut 2, so that the order of cut transitions becomes normal between the main cut and the sub-cut.

Instead of sorting out the main cut and the sub-cut separately based on the respective numbers of frames, the main cut may be selected based on the number of frames to subsequently select the sub-cut belonging to the same cut pair as the selected main cut. In this case, if, for example, the main cuts 5, 9, 11 are sorted out, the sub-cuts 6, 10, 12 are automatically selected.

Also instead of the number of frames of the main cut, the cut pairs 1 to 7 may be categorized based on the number of frames of the sub-cut or the number of frames of the cut pair. Also instead of two main cuts whose number of frames is the largest or the second largest, the positions of two main cuts with the smallest two numbers of frames may be used as delimiters. Also instead of sorting out the main cut and the sub-cut with the largest numbers of frames for each pair group, the main cut and the sub-cut belonging to the cut pair with the largest number of frames may be selected.

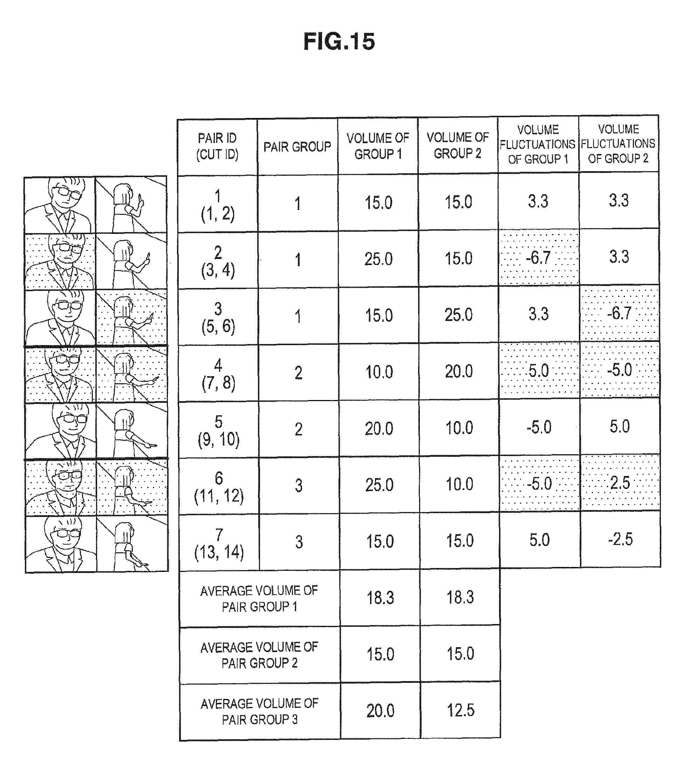

Fig. 15 shows an example in which cut pairs are generated based on volume fluctuations between cuts. First, like the example shown in Fig. 13, the cut pairs 1 to 7 are categorized into the pair groups 1 to 3 based on the numbers of the cut pairs.

Next, the main cut with the maximum volume fluctuations is sorted from main cuts (cuts 1, 3, 5, 7, 9, 11, 13) belonging to the cut group 1 for each of the cut groups 1 to 3. The volume fluctuations are calculated as a ratio of volume of each main cut to the average volume of main cuts contained in each pair group. In the above example, the main cut 3 (volume fluctuation: -6.7), the main cut 7 (volume fluctuation: 5.0), and the main cut 11 (volume fluctuation: 5.0) with the maximum absolute values of volume fluctuations to the average volumes 18.3, 15.0, 20.0 of main cuts contained in the pair groups 1, 2, 3 respectively are sorted out (see the item of Group 1 volume fluctuations). When two or more absolute maximum values are present in the same pair group, the main cut having the smallest cut ID is sorted out for convenience sake.

Similarly, the sub-cut with the maximum volume fluctuations is sorted from sub-cuts (cuts, 2, 4, 6, 8, 10, 12, 14) belonging to the cut group 2 for each of the cut groups 1 to 3. The volume fluctuations are calculated as a ratio of volume of each sub-cut to the average volume of sub-cuts contained in each pair group. In the above example, the sub-cut 6 (volume fluctuation: -6.7), the sub-cut 8 (volume fluctuation: -5.0), and the sub-cut 12 (volume fluctuation: 2.5) with the maximum absolute values of volume fluctuations to the average volumes 18.3, 15.0, 12.5 of sub-cuts contained in the pair groups 1, 2, 3 respectively are sorted out (see the item of Group 2 volume fluctuations). When two or more absolute maximum values are present in the same pair group, the sub-cut having the smallest cut ID is sorted out for convenience sake. Thus, a cut pair comprised of the cuts 3, 6, a cut pair comprised of the cuts 7, 8, and a cut pair comprised of the cuts 11, 12 are generated to generate the cut composition image CI.

Instead of categorizing cut pairs into pair groups based on the numbers of frames of the cut pairs, like the example shown in Fig. 14, two cuts with the largest two volume fluctuations may be selected from all cuts to categorize the cut pairs 1 to 7 into pair groups by using the positions of the selected cuts as delimiters. The volume fluctuations are calculated as a ratio of volume of each cut to the average volume of all cuts contained in the cut pairs 1 to 7.

The cut with the largest volume fluctuations may be sorted from all cuts contained in each pair group without distinguishing the main cut and the sub-cut for each of the pair groups 1 to 3. For example, the cut 3 (volume fluctuation -6.7 from the average volume 18.3) with the largest volume fluctuations may be sorted from the cuts 1 to 6 for the pair group 1 to sort out the cut 4 belonging to the same cut pair 2 as the selected cut 3.

Also instead of sorting out the main cut and the sub-cut with the largest volume fluctuations separately for each pair group, the main cut and the sub-cut belonging to the cut pair with the largest volume fluctuations may be sorted out. The volume fluctuations are calculated as a ratio of volume of each cut pair to the average volume of all cut pairs contained in each pair group.

Next, a case when cut pairs are generated from the cut pairs 1 to 7 so that the optimal display number Nopt=3 is satisfied according to the second generation procedure will be described. Processing conditions and the cut configuration shown below are only examples to describe the generation processing of cut pairs.

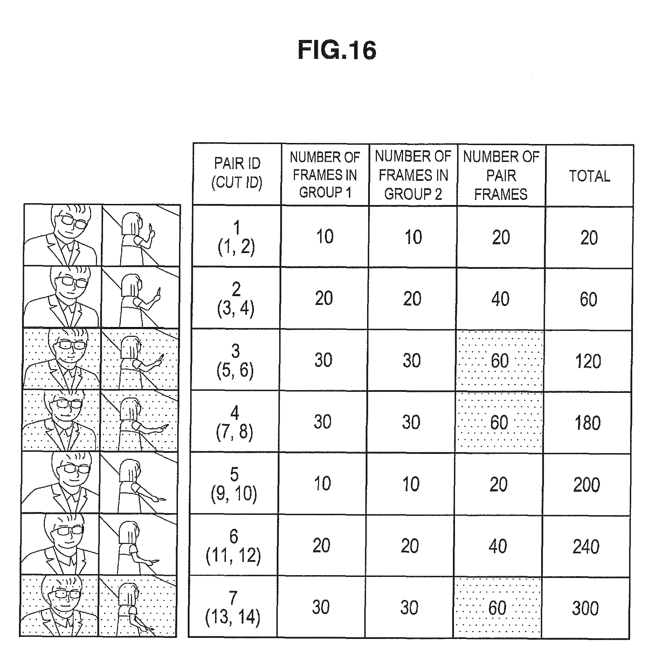

Fig. 16 shows an example in which cut pairs are generated based on the numbers of frames of cut pairs. Three cut pairs with the largest three numbers of frames are selected from the cut pairs 1 to 7. Then, cuts contained in the selected cut pairs are sorted out. In the above example, the cuts 5 to 8, 13, 14 corresponding to the cut pairs 3, 4, 7 with the numbers of frames 60, 60, 60 respectively are sorted out (see the item of Number of pair frames). Thus, three cut pairs comprised of the cut pairs 3, 4, 7 are generated to generate the cut composition image CI.

Instead of three cut pairs with the three largest numbers of frames, three cut pairs with the average number of frames may be selected or one cut pair with the average number of frames and two cut pairs with the two largest numbers of frames may be selected.

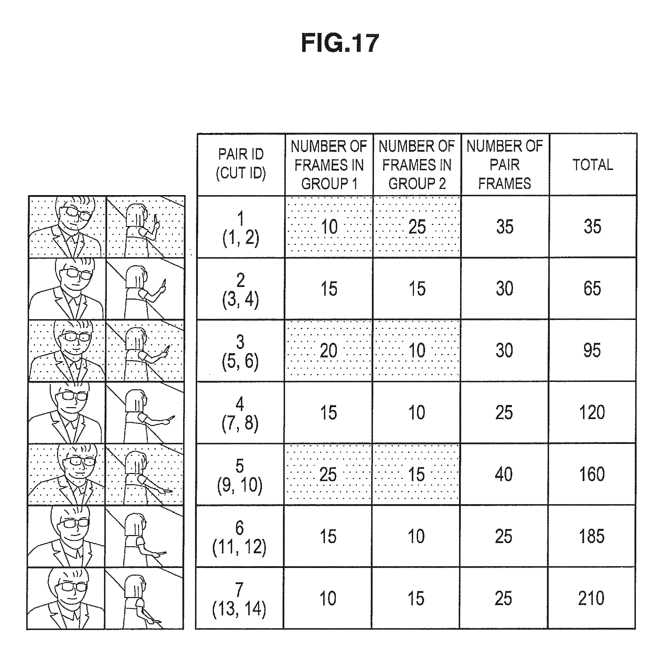

Fig. 17 shows an example in which cut pairs are generated based on the numbers of frames of cuts. First, three cuts with the three largest numbers of frames are selected from all cuts contained in the cut pairs 1 to 7. Next, cuts belonging to the same cut pairs as the selected cuts are selected. In the above example, after the cuts 2, 5, 9 with the numbers of frames 25, 20, 25 being sorted out, the corresponding cuts 1, 6, 10 are sorted out respectively. Thus, three cut pairs comprised of the cut pairs 1, 3, 5 are generated to generate the cut composition image CI.

Three cuts with the three largest numbers of frames may be sorted out from one of main cuts and sub-cuts, instead of all cuts. Also, one cut with the average number of frames may be selected from one of main cuts and sub-cuts and two cuts with the two largest numbers of frames may be selected from the other.

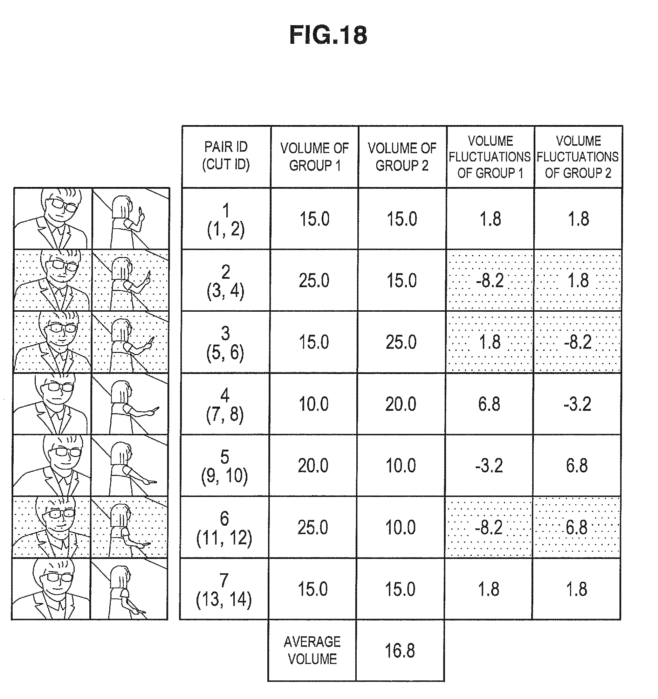

Fig. 18 shows an example in which cut pairs are generated based on volume fluctuations between cuts. First, three cuts with the three largest volume fluctuations are selected from all cuts contained in the cut pairs 1 to 7. The volume fluctuations are calculated as a ratio of volume of each cut to the average volume of cuts contained in the cut pairs 1 to 7. Next, cuts belonging to the same cut pairs as the selected cuts are selected. In the above example, after the cuts 3, 6, 11 with the volume fluctuations -8.2 for all being sorted out, the corresponding cuts 4, 5, 12 are sorted out (see the item Group 1, 2 volume fluctuations). Thus, three cut pairs comprised of the cut pairs 2, 3, 6 are generated to generate the cut composition image CI.

Three cuts with the three largest volume fluctuations may be sorted out from one of main cuts and sub-cuts, instead of all cuts. The volume fluctuations are calculated as a ratio of volume of each cut to the average volume of main cuts or sub-cuts contained in the cut pairs 1 to 7.

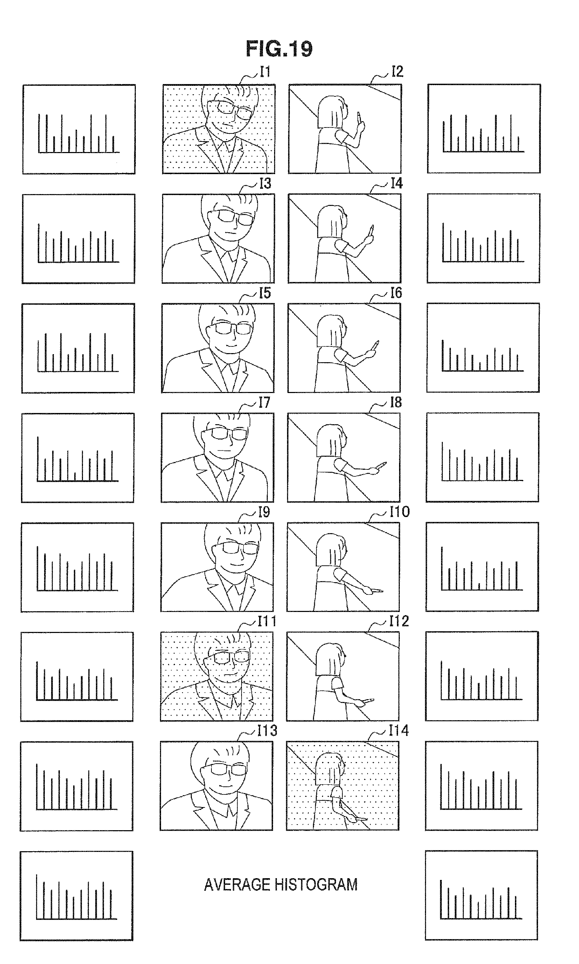

Fig. 19 shows an example in which cut pairs are generated based on screen brightness fluctuations between cuts. First, histograms that represent normalized screen brightness are calculated based on image processing for representative images of the cuts 1 to 14. Next, an average histogram of seven cuts is calculated for each cut group. A histogram represents the frequency in each section when brightness of pixels contained in a representative image is sectioned at predetermined brightness intervals. Fig. 19 shows normalized histograms of representative images I1 to I14 and average histograms for cut groups, along with the representative images I1 to I14 of the cuts 1 to 14.

Next, three cuts with the three largest fluctuations with respect to the average histogram are sorted out. Fluctuations of a histogram are calculated as differences between the normalized histogram of each cut and the average histogram of the cut group to which each cut belongs. Then, cuts belonging to the same cut pairs as the selected cuts are selected. In the above example, fluctuations of the cuts 1, 11, 14 are the three largest and three cut pairs comprised of the cut pairs 1, 6, 7 are generated to generate the cut composition image CI.

Next, a case when cut pairs are generated based on similarities of feature amounts between cuts will be described. A case when cut pairs are generated from the cuts 1 to 14 constituting the cut pairs 1 to 7 so that the optimal display number Nopt=3 is satisfied.

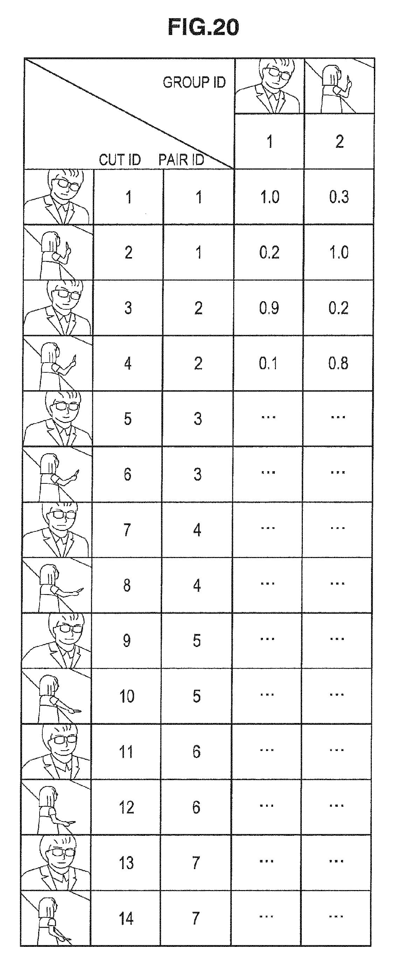

Fig. 20 shows results of calculating similarities of feature amounts among the cuts 1 to 14. In the calculation results shown in Fig. 20, the cuts 1 to 14 are categorized into the cut group 1 (cuts 1, 3, 5, 7, 9, 11, 13) and the cut group 2 (cuts 2, 4, 6, 8, 10, 12, 14) and also into the cut pairs 1 to 7.

In Fig. 20, similarities of feature amounts among the cuts 1 to 14 are shown as values between 0 and 1 relative to feature amounts S1, S2 of the cut groups 1, 2 corresponding to feature amounts of the cuts 1, 2. A similarity of feature amounts closer to 1 means that the feature amounts between cuts are more similar. For example, while the cuts 1 and 3 belonging to the same cut group have a high similarity of feature amounts of 0.9, the cuts 1 and 4 belonging to different cut groups have a low similarity of feature amounts of 0.1.

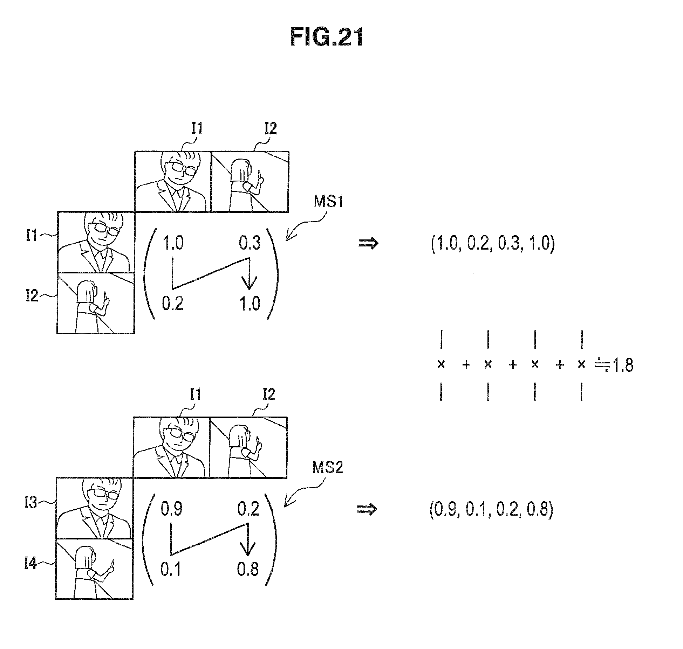

Fig. 21 shows a first similarity matrix Ms1 showing a similarity between the cuts 1, 2 and a second similarity matrix Ms2 showing a similarity between the cuts 3, 4. The first and second similarity matrices Ms1, Ms2 are matrices extracted from calculation results shown in Fig. 20. Then, the similarity between the cut pair 1 (cuts 1, 2) and the cut pair 2 (cuts 3, 4) can be calculated by the inner product of the first and second similarity matrices Ms1, Ms2. An increasing inner product of the first and second similarity matrices Ms1, Ms2 means that the cut pairs are more similar.

As shown in Fig. 21, the first similarity matrix Ms1 is vectorized as (1.0, 0.2, 0.3, 1.0) and the second similarity matrix Ms2 is vectorized as (0.9, 0.1, 0.2, 0.8). Thus, the inner product of the first and second similarity matrices Ms1, Ms2 is calculated as 1.0×0.9+0.2×0.1+0.3×0.2+1.0×0.8≒1.8. Similarities among the cut pairs 1 to 7 excluding between the cut pairs 1, 2 can be calculated by the same method.

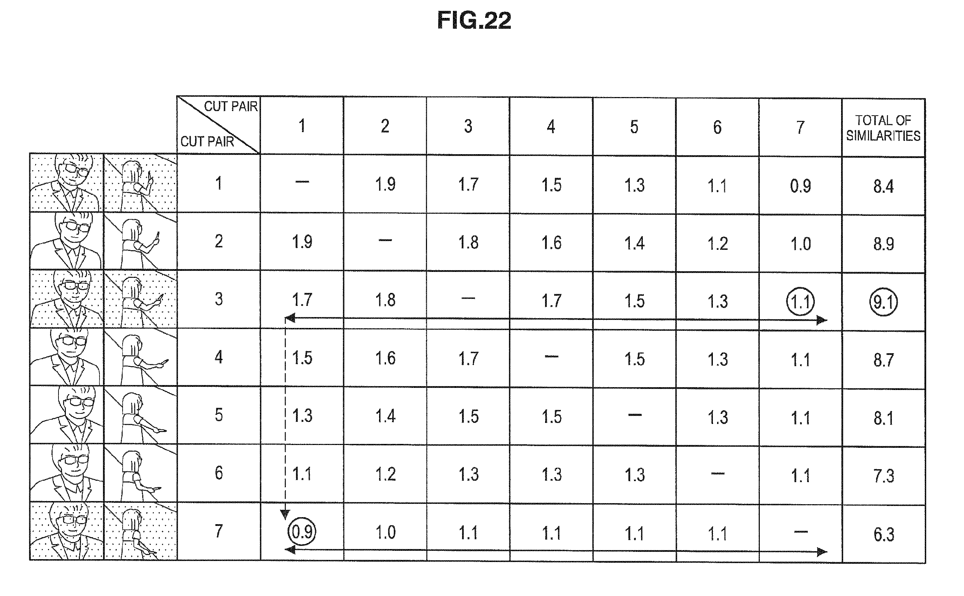

Accordingly, as shown in Fig. 22, similarities among the cut pairs 1 to 7 are calculated. Fig. 22 shows the total of similarities of each of the cut pairs 1 to 7 along with similarities among the cut pairs 1 to 7. An increasing total of similarities means that the cut pair has an increasing degree of affinity, that is, the probability that the cut pair represents the cut pairs 1 to 7 increases.

When cut pairs are generated based on the inner product of similarity matrices Ms (generic term for similarity matrices), the cut pair 3 with the maximum total (9.1) of similarities is first selected. Secondly, the cut pair 7 with the lowest similarity (1.1) to the cut pair 3 is selected. Thirdly, the cut pair 1 with the lowest similarity (0.9) to the cut pair 7 is selected. Thus, three cut pairs comprised of the cut pairs 1, 3, 7 are generated to generate the cut composition image CI.

Instead of the criteria of the lowest similarity to the cut pair 7, the cut pair may be selected according to the criteria of the second lowest similarity to the cut pair 3. Also, three cut pairs may also be selected according to the criteria of a cut pair of the maximum total of similarities, a cut pair of the minimum total, and a cut pair closest to the average value.

Accordingly, the representative cut pair representing all cut pairs and other cut pairs dissimilar to the representative cut pair can be generated.

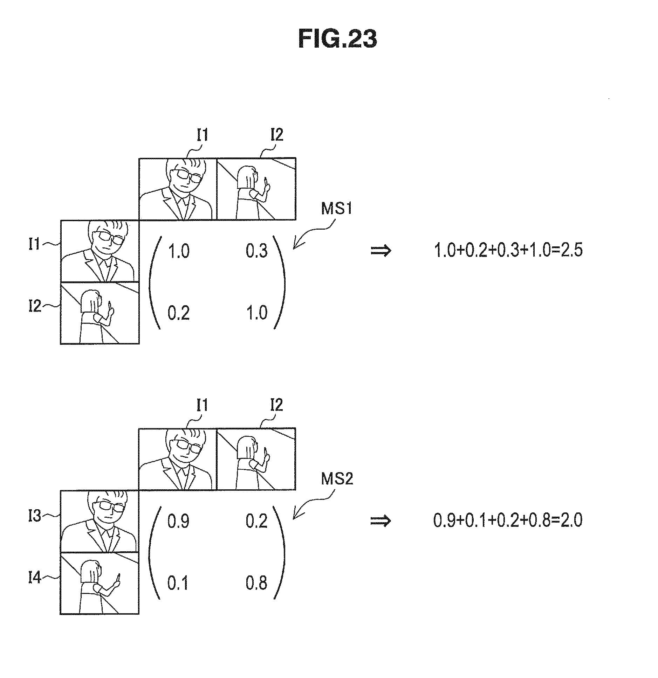

Fig. 23 shows the first similarity matrix Ms1 showing similarities between the cuts 1, 2 and the second similarity matrix Ms2 showing similarities between the cuts 3, 4. The first and second similarity matrices Ms1, Ms2 are matrices extracted from calculation results shown in Fig. 20. Then, cut pairs can be selected based on a scalar value of a similarity matrix Ms showing similarities among the cuts 1 to 14. An increasing scalar value of the similarity matrix Ms means that the probability that the cut pair represents the cut pairs 1 to 7 increases.

For example, the scalar value of the first similarity matrix Ms1 is calculated as 1.0+0.2+0.3+1.0=2.5 and the scalar value of the second similarity matrix Ms2 is calculated as 0.9+0.1+0.2+0.8=2.0. Thus, of the cut pair 1 (cuts 1, 2) and the cut pair 2 (cuts 3, 4), the cut pair 1 has a higher probability of being a representative cut pair representing all cut pairs.

When cut pairs are generated based on the scalar value of the similarity matrix Ms, scalar values of the similarity matrices Ms are calculated among the cut pairs 1 to 7. Next, three cut pairs are selected by replacing the total of similarities with the scalar value and performing processing in the case shown in Fig. 22. Then, cuts contained in the selected cut pairs are sorted out.

Accordingly, the representative cut pair representing all cut pairs and other cut pairs dissimilar to the representative cut pair can be generated.

When the cut pair generation processing is completed, as shown in Fig. 3, meta /information MI of each cut is generated by the meta information generation unit 21 (step S21). The meta information generation unit 21 extracts features of images or audios contained in each cut from the moving picture data MP based on the moving picture data MP and detection results of cut transitions.

If, for example, a cut contains a sound (words, sound effects or the like), the sound contained in the cut may be extracted to generate character/image information corresponding to the extracted sound through voice recognition processing. If no sound is contained in a cut, character/image information indicating a silent cut may be generated. Silent cuts may be distinguished between silent cuts containing no words and silent cuts containing neither words nor sound effects. Character/image information indicating the average value/variations of volume of the sound contained in a cut, ratio of silent intervals and non-silent intervals, and tone, rhythm, or fluctuations of the sound may also be generated.

The number of frames contained in a cut or the time needed to reproduce a cut may be calculated to generate character/image information indicating the calculated value. Also, character/image information indicating the average value/variations of brightness of images contained in a cut and content or changes of images may be generated.

The cut composition image generation unit 23 generates the cut composition image CI based on results of the cut pair generation processing (step S23). The cut composition image generation unit 23 first extracts the representative image I from a series of images belonging to the selected cut according to predetermined criteria based on the moving picture data MP and results of the cut pair generation processing. The representative image I of each cut may also be extracted in advance when cut transitions are detected. Next, the cut composition image CI in which the representative images I of cuts are arranged in the order of cut transitions while cut pairs being specified is generated. If the meta information MI of each cut has been generated, the meta information MI is displayed together with the representative image I of each cut.

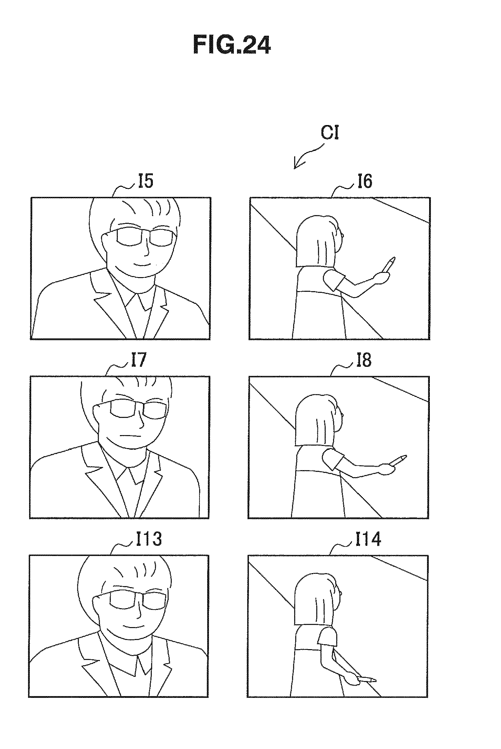

Fig. 24 exemplifies the cut composition image CI generated from results of the cut pair generation processing shown in Fig. 13. In the cut composition image CI shown in Fig. 24, the representative images I5, I6 of the cuts 5, 6 are arranged horizontally, the representative images I7, I8 of the cuts 7, 8 are arranged horizontally below the representative images I5, I6 of the cuts 5, 6, and the representative images I3, I4 of the cuts 3, 4 are arranged horizontally below the representative images I7, I8 of the cuts 7, 8. The cut composition image CI described above facilitates the understanding of the cut composition. However, the composition of the cut composition image CI is not limited to the composition shown in Fig. 24.

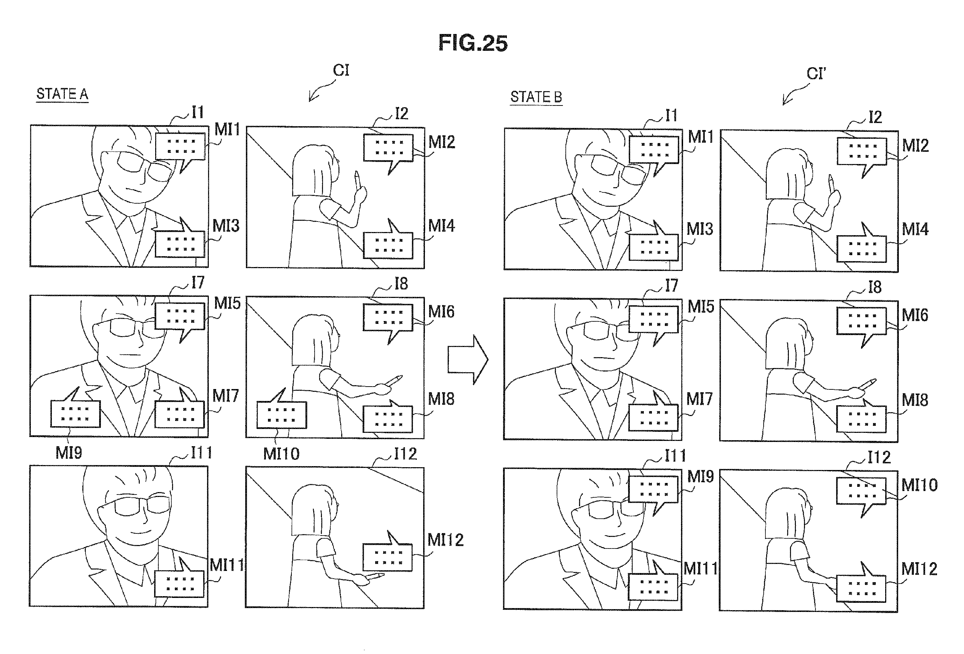

Fig. 25 shows a modification of the cut composition image CI. In the cut composition image CI shown in Fig. 25, the meta information MI of a cut is displayed by being superimposed on the representative image I of the cut. The meta information MI of a cut is information indicating features of images or audios contained in the cut.

The meta information MI indicating sound features is, for example, information indicating content of sound (words, sound effects or the like) contained in each cut, information indicating that no sound is contained in each cut (indicating a silent cut) and the like. The meta information MI indicating image features is, for example, information indicating the number of frames contained in each cut, information indicating the time needed to reproduce each cut and the like.

In a cut composition image CI shown in a state A of Fig. 25, for example, meta information MI1, MI3 of the cuts 1, 3, meta information MI5, MI7, MI9 of the cuts 5, 7, 9, and meta information MI11 of the cut 11 are displayed by being superimposed on the representative image I1 of the cut 1, the representative image I7 of the cut 7, and the representative image I11 of the cut 11 respectively. Accordingly, visibility of the representative image I7 of the cut 11 in which the meta information MI5, MI7, MI9 of three cuts is displayed by being superimposed thereon is reduced.

Thus, the contrast ratio by the meta information MI, that is, the display occupancy of the meta information MI on the representative image I is calculated for the representative images I1, I7, I11 of the cuts 1, 7, 11. In this case, while the contrast ratio of the representative image I7 of the cut 7 is relatively high, the contrast ratio of the representative image I11 of the cut 11 is relatively low.

Thus, in a cut composition image CI' shown in a state B of Fig. 25, the meta information MI9 of the cut 9 on the representative image I7 of the cut 7 is moved onto the representative image I11 of the cut 11 based on the contrast ratio by the meta information MI. Accordingly, when compared with the state A, the contrast ratio becomes lower in the representative image I7 of the cut 7 so that visibility of the representative image I7 can be maintained.

According to the moving picture processing method according in the present embodiment, as described above, the cut composition image CI capable of maintaining at-a-glance visibility of the cut composition and visibility of the cut composition image CI can be generated by generating a predetermined number of cut pairs by combining at least a portion of a plurality of cuts so that predetermined conditions are satisfied and generating the cut composition image CI comprised of generated cut pairs.

Although the preferred embodiment of the present disclosure is described in detail so far with reference to the appended drawings, the present disclosure is not limited to such an example. It is clear that one of ordinary skill in the technical field to which the present disclosure pertains may conceive of various variations or modifications without departing from the technical idea recited in claims, and it is understood that they naturally pertain to the technical scope of the present disclosure.

In the above embodiment, for example, the composition image CI is described as an image in which cut pairs of the optimal display number Nopt=3 are arranged in three rows. However, the composition image CI may be generated with a different optimal display number Nopt in accordance with display conditions thereof or even if the optimal display number Nopt is the same, the composition image CI may be generated as an image in which the representative images I are arranged in a different number of rows/columns.

### Reference Signs List

| | |
|---|---|
| 1 | Moving picture processing device |
| 11 | Data acquisition unit |
| 13 | Cut transition detection unit |
| 15 | Cut pair identification unit |
| 17 | Display optimization unit |
| 19 | Cut pair generation unit |
| 21 | Meta information generation unit |
| 23 | Cut composition image generation unit |
| 25 | Cut composition image output unit |
| 27 | Cut composition information output unit |
| 29 | Data storage unit |
| MP | Moving picture (data) |
| I | Representative image |
| Nopt | Optimal display number |
| CI | Cut composition image |
| Ad | Display area |
| Ro | Display occupancy |

## Claims

1. A moving picture processing device, comprising:
a cut transition detection unit that detects, from a moving picture containing a plurality of cuts, transitions between the cuts;
a cut pair identification unit that categorizes the plurality of cuts into a plurality of cut groups having mutually different feature amounts, and identifies a plurality of cut pairs including two or more sequential cuts belonging to the mutually different cut groups and being repeated in the moving picture;
a cut pair generation unit that generates a predetermined number of the cut pairs, which are less than the plurality of cut pairs in number, from the plurality of cut pairs by combining at least a portion of the plurality of cuts in a manner that two or more cuts constituting each cut pair belong to mutually different cut groups and a context of cut transitions in the moving picture is maintained; and
a cut composition image generation unit that generates a cut composition image including the generated cut pairs.

2. The moving picture processing device according to claim 1, wherein the cut pair generation unit categorizes the plurality of cut pairs into the predetermined number of pair groups, and then, for each of the pair groups, generates one cut pair from cut pairs contained in each of the pair groups by combining at least a portion of the cuts contained in each of the pair groups in a manner that two or more cuts constituting each cut pair belong to mutually different cut groups and a context of cut transitions in the moving picture is maintained.

3. The moving picture processing device according to claim 2, wherein the cut pair generation unit categorizes the plurality of cut pairs into the predetermined number of pair groups based on feature amounts of cuts.

4. The moving picture processing device according to claim 2, wherein the cut pair generation unit categorizes the plurality of cut pairs into the predetermined number of pair groups based on feature amounts of cut pairs.

5. The moving picture processing device according to claim 1, wherein the cut pair generation unit generates one cut pair by combining the plurality of cuts based on feature amounts of cuts.

6. The moving picture processing device according to claim 1, wherein the cut pair generation unit generates one cut pair by combining the plurality of cuts based on feature amounts of cut pairs.

7. The moving picture processing device according to claim 1, wherein the cut pair generation unit sorts out cuts based on feature amounts of cuts for each cut group, and generates one cut pair by combining the plurality of sorted cuts.

8. The moving picture processing device according to claim 1, wherein the cut pair generation unit sorts out cuts based on feature amounts of cuts for a first cut group, and generates one cut pair by combining a plurality of cuts belonging to a same cut pair as the sorted cuts.

9. The moving picture processing device according to claim 1, wherein the cut pair is generated based on an inner product of similarity matrices indicating a similarity between cut pairs.

10. The moving picture processing device according to claim 9, wherein the cut pair with a maximum total of the inner products of the similarity matrices is generated as a representative cut pair representing the plurality of cut pairs.

11. The moving picture processing device according to claim 10, wherein the cut pair whose similarity to the representative cut pair is low is generated together with the representative cut pair.

12. The moving picture processing device according to claim 1, wherein the cut pair is generated based on a scalar value of a similarity matrix indicating a similarity between cut pairs.

13. The moving picture processing device according to claim 12, wherein the cut pair with a maximum scalar value of the similarity matrix is generated as a representative cut pair representing the plurality of cut pairs.

14. The moving picture processing device according to claim 13, wherein the cut pair whose similarity to the representative cut pair is low is generated together with the representative cut pair.

15. The moving picture processing device according to claim 1, wherein the predetermined number is set in accordance with display conditions of the cut composition image.

16. A moving picture processing method, comprising:
detecting, from a moving picture containing a plurality of cuts, transitions between the cuts;
categorizing the plurality of cuts into a plurality of cut groups having mutually different feature amounts, and identifies a plurality of cut pairs including two or more sequential cuts belonging to the mutually different cut groups and being repeated in the moving picture;
generating a predetermined number of the cut pairs, which are less than the plurality of cut pairs in number, from the plurality of cut pairs by combining at least a portion of the plurality of cuts in a manner that the two or more cuts constituting each cut pair belong to mutually different cut groups and a context of cut transitions in the moving picture is maintained; and
generating a cut composition image including the generated cut pairs.

17. A program causing a computer to execute a moving picture processing method, comprising:
detecting, from a moving picture containing a plurality of cuts, transitions between the cuts;
categorizing the plurality of cuts into a plurality of cut groups having mutually different feature amounts, and identifies a plurality of cut pairs including two or more sequential cuts belonging to the mutually different cut groups and being repeated in the moving picture;
generating a predetermined number of the cut pairs, which are less than the plurality of cut pairs in number, from the plurality of cut pairs by combining at least a portion of the plurality of cuts in a manner that the two or more cuts constituting each cut pair belong to mutually different cut groups and a context of cut transitions in the moving picture is maintained; and
generating a cut composition image including the generated cut pairs.
